# EUROPEAN PATENT APPLICATION

(11) **EP 4 657 199 A1**
(43) Date of publication of application: **03.12.2025**
(21) Application number: 24178279.6
(22) Date of filing: 27.05.2024
(51) Int. Cl.: G05D 23/19, F24F 11/00

(54) **SYSTEM AND METHOD FOR MANAGING COOLING LOAD WITHIN A BUILDING**

(71) Applicant: Siemens Aktiengesellschaft, 80333 München (DE)
(72) Inventor: NATH, Ayan, 700075 Kolkata, West Bengal (IN); KHALIL, Mohamed, 81379 München (DE); PANDEY, Vinoba, 700002 Kolkata (IN)
(74) Representative: HKW Intellectual Property PartG mbB

(57) **Abstract**

The invention relates to a system and method for managing cooling load within a building wherein a cooling system (102) is installed. The method comprises obtaining, by a processing unit (125), cooling load data associated with one or more locations within the building from one or more sources (105). Further, values of a plurality of operating variables associated with the cooling system (102) are estimated using the cooling load data. Based on the determined values of the plurality of operating variables, optimized cooling flowrate is computed for each of the one or more locations using an optimizer, wherein at least one objective associated with the optimizer is to minimize a total energy consumption by the cooling system. Furthermore, instructions for implementing the optimized cooling flowrate for each of the one or more locations are generated and transmitted to one or more target devices (115) operably coupled to the cooling system (102).

## Description

The present invention relates to cooling systems, and more particularly relates to a system and method for managing cooling load within a building wherein a cooling system is installed.

The cooling load within different areas of a building can vary significantly based on usage patterns and operational cycles, presenting dynamic and variable thermal demands. For example, conference rooms or auditoriums require cooling only during scheduled meetings or events. Additionally, various floors within a building complex may serve different purposes, necessitating adjustments in cooling flowrates to meet specific requirements. Critical laboratory spaces often require continuous cooling, whereas general workspace areas may only need cooling during occupied hours. An efficient cooling system capable of distributing cooling flows to different building zones and dynamically adjusting these flows in response to evolving cooling load patterns offers the potential to significantly reduce overall power consumption and operational costs.

In existing art, rule-based approaches are used for controlling cooling systems. For example, in case of `always on' cooling systems, cooling flowrates are kept constant leading to high energy consumption. Similarly, some cooling systems that use programmable logic controllers, allow a user to set temperature for specific parts of the building. In case of schedule-based cooling systems, the cooling flowrates are reduced in certain parts of the building, for example, at night. As may be understood by a person skilled in the art, the rules are set during design phase of a building, based on certain assumptions about the expected cooling load at various portion of the building. However, the actual cooling load variations might vary significantly during operation of the cooling system. Under such circumstances the rule-based cooling control systems fails and often results in undercooling or over-cooling at certain parts of the building, resulting in non-optimal energy consumption for the cooling systems.

Prior studies have explored utilizing thermodynamic relationships between cooling system components to assess system performance. However, such analyses typically rely on expert designers to consider numerous factors affecting building cooling and conduct optimization studies to determine optimal cooling strategies. Implementing updates or changes to building cooling policies often requires expert tuning or programming, which can be impractical for building operators to undertake independently.

In light of the above, there exists a need for a system and method for managing cooling load within a building.

Therefore, it is an object of the present invention to provide a system and method for managing cooling load within a building.

The object of the present invention is achieved by a method for managing cooling load within a building, wherein a cooling system is installed, as disclosed herein. The method comprises obtaining, by a processing unit, cooling load data associated with one or more locations within the building from one or more sources. In an embodiment, the one or more sources comprise at least one of temperature sensors, occupancy sensors, airflow sensors, humidity sensors, infrared cameras/thermometers and human-machine interfaces.

The method further comprises estimating values of a plurality of operating variables associated with the cooling system using the cooling load data. In an embodiment, the plurality of operating variables comprise a heat transfer rate, local temperature and cooling flowrate associated with the one or more locations within the building. In an embodiment, the step of estimating values of the plurality of operating variables further comprises configuring, using the cooling load data, a virtual model based on a combination of at least the building and the cooling system. In an embodiment, the virtual model is a physics-based model based on a combination of at least the building and the cooling system. A thermal behaviour of the building is further simulated based on the configured virtual model. Furthermore, values of the plurality of operating variables are estimated based on the simulation of the thermal behaviour of the building.

The method further comprises computing optimized cooling flowrate for each of the one or more locations using an optimizer, based on the estimated values of the plurality of operating variables, wherein at least one objective associated with the optimizer is to minimize a total energy consumption by the cooling system. In an embodiment, at least one constraint associated with the optimizer comprises maintaining a temperature in each of the locations within a predefined temperature range.

In an embodiment, the optimized cooling flowrate is computed if an off-design condition associated with the cooling system is detected based on the cooling load data. In a further embodiment, detecting the off-design condition associated with the cooling system based on the cooling load data, comprises determining at least one performance parameter of the cooling system based on the cooling load data. In an embodiment, the performance parameter is at least one a heat transfer rate, temperature difference between two locations in the building, heat transfer effectiveness, airflow rate, air temperatures and energy consumption of the cooling system.The determined at least one performance parameter is further compared with a design specification of the cooling system. Further, the off-design condition associated with the cooling system is detected based on the comparison.

The method further comprises generating and transmitting, to one or more target devices operably coupled to the cooling system, instructions for implementing the optimized cooling flowrate for each of the one or more locations.

The object of the present invention is also achieved by a an apparatus for managing cooling load within a building as disclosed herein. The apparatus includes one or more processing units, and a memory unit communicatively coupled to the one or more processing units. The memory unit comprises a cooling load management module stored in the form of machine-readable instructions executable by the one or more processing units. The cooling load management module is configured to perform method steps according to any of the method steps described above.

The object of the present invention is also achieved by a system for managing cooling load within a building, wherein a cooling system is installed. The system includes one or more sources configured for providing cooling load data associated with the cooling system, an apparatus as described above, communicatively coupled to the one or more sources. The apparatus is configured for managing cooling load within one or more locations within the building based on the cooling load data, according to any of the method steps described above.

The object of the present invention is also achieved by a computer-readable medium, on which program code sections of a computer program are saved, the program code sections being loadable into and/or executable by a processor which performs the method as described above when the program code sections are executed.

The realization of the invention by a computer program product and/or a non-transitory computer-readable storage medium has the advantage that computer systems can be easily adopted by installing computer program in order to work as proposed by the present invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes, features, and advantages of the present invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
FIG 1A is a block diagram of a system for managing cooling load within a building wherein a cooling system is installed, according to an embodiment of the present invention;
FIG 1B is a block diagram of an apparatus for managing cooling load within a building wherein a cooling system is installed, according to an embodiment of the present invention;
FIG 2 shows a flowchart of an exemplary method 200 for managing cooling load within a building, in accordance with an embodiment of the present invention;
FIG 3 shows a Graphical User Interface showing a virtual model of a three-storeyed building, according to an exemplary embodiment.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

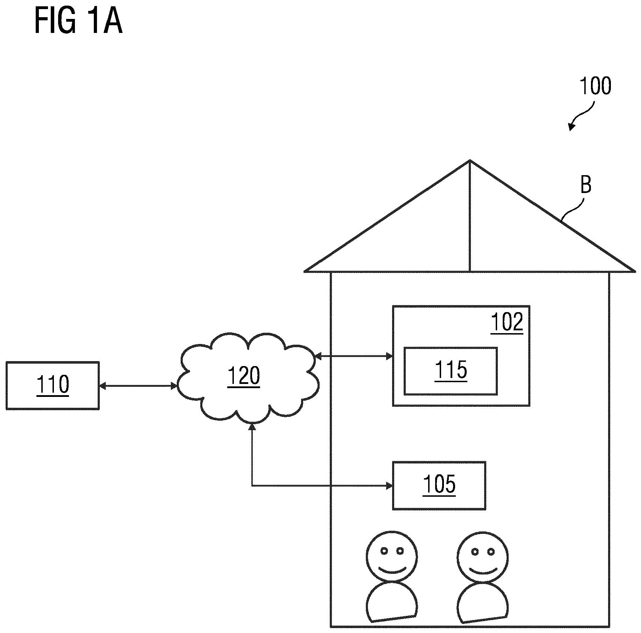

FIG 1A provides an illustration of a block diagram of a system 100 for managing cooling load within a building wherein a cooling system 102 is installed, according to an embodiment of the present invention. The system includes one or more sources 105 communicatively coupled to an apparatus 110. The term "source" as used herein may refer to any hardware device such as a sensing unit or a software entity such as a soft sensors, that are configured to provide data indicative of cooling load condition in different locations within the building. Additionally, the source 105 may also include human-machine interfaces that enable an occupant to provide preferences such as temperature set-points to the apparatus. For example, the system may be associated with a multi-storey building, and a plurality of sources 105 may be located at different locations within the multi-storey building. In the present example, different sources may provide cooling load conditions corresponding to a server room, a cafeteria, a kitchen, a working space, a recreation area, a reception area etc. In an embodiment, the apparatus is a cooling system controller. The apparatus is further communicatively coupled to one or more target devices 115 operably coupled to the cooling system 102. In an embodiment, the one or more target devices 115 include one or more actuators associated with cooling equipment such as blowers located at different locations within the building.

Each of the one or more sources 105 and the one or more target devices 115 are connected to the apparatus 110 via a network 120, for example, local area network (LAN), wide area network (WAN), Wi-Fi, etc. In one embodiment, the apparatus 110 is deployed in a cloud computing environment. As used herein, "cloud computing environment" refers to a processing environment comprising configurable computing physical and logical resources, for example, networks, hardware, storage, applications, services, etc., and data distributed over the network, for example, the internet. The cloud computing environment provides on-demand network access to a shared pool of the configurable computing physical and logical resources.

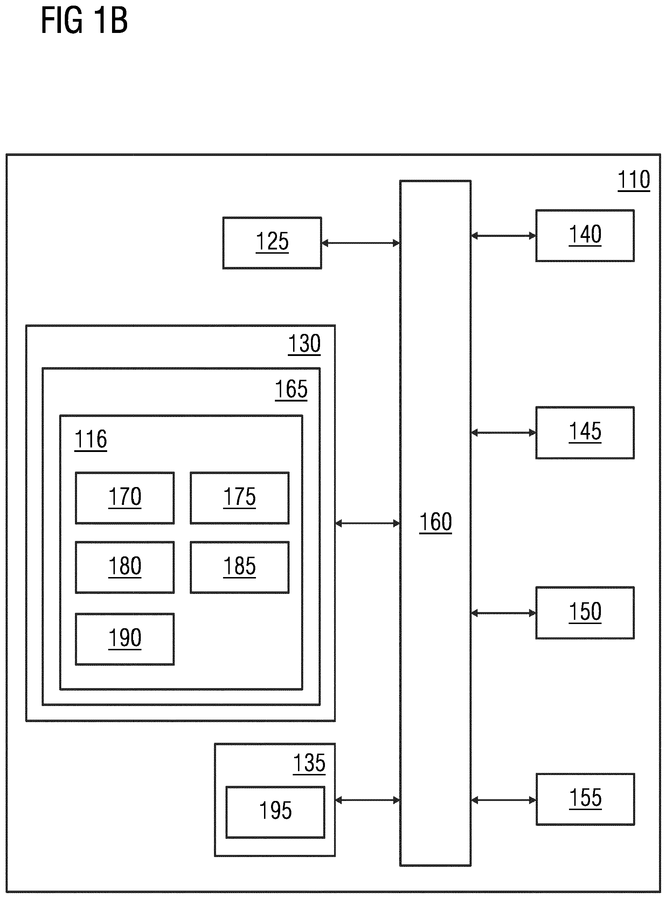

The apparatus 110 comprises a processing unit 125, a memory 130, a storage unit 135, a communication unit 140, a network interface 145, an input unit 150, an output unit 155, a standard interface or bus 160, as shown in FIG 1B. The apparatus 110 can be a (personal) computer, a workstation, an edge device, a building automation controller, a virtual machine running on host hardware, a microcontroller, or an integrated circuit. As an alternative, the apparatus 110 can be a real or a virtual group of computers (the technical term for a real group of computers is "cluster", the technical term for a virtual group of computers is "cloud").

The term `processing unit`, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processing unit 125 may also include embedded controllers, such as generic or programmable logic devices or arrays, application specific integrated circuits, single-chip computers, and the like. In general, the processing unit 125 may comprise hardware elements and software elements. The processing unit 125 can be configured for multithreading, i.e. the processing unit 125 may host different calculation processes at the same time, executing the either in parallel or switching between active and passive calculation processes.

The memory 130 may include one or more of a volatile memory and a non-volatile memory. The memory 130 may be coupled for communication with the processing unit. The processing unit 125 may execute instructions and/or code stored in the memory 130. A variety of computer-readable storage media may be stored in and accessed from the memory 130. The memory 130 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like.

The memory 130 comprises a cooling load management module 165. The cooling load management module 165 further comprises an cooling load detection module 170, an off-design detection module 175, a variables estimation module 180, optimization module 185 and an instruction management module 190. The cooling load detection module 170 is configured to obtain cooling load data associated with one or more locations within the building from the one or more sources 105. The term cooling load data as used herein refers to a numerical value indicative of cooling load experienced by the cooling system 102. The variables estimation module 180 is configured to estimate values of a plurality of operating variables associated with the cooling system 102 using the cooling load data. The optimization module 185 is configured to compute optimized cooling flowrate for each of the one or more locations using an optimizer, based on the estimated values of the plurality of operating variables. The instruction management module 190 is configured to generate and transmit one or more instructions to the one or more target devices 115 operably coupled to the cooling system 102, for implementing the optimized cooling flowrate for each of the one or more locations. The off-design detection module 175 is configured to detect an off-design condition associated with the cooling system 102 based on the cooling load data. In an embodiment, the optimized cooling flowrate is computed if an off-design condition is detected based on the cooling load data.

The cooling load management module 165 may be stored in the memory 130 in the form of machine-readable instructions and executable by the processing unit 125. These machine-readable instructions when executed by the processing unit 125 causes the processing unit 125 to manage cooling load in one or more locations within the building.

The storage unit 135 comprises a non-volatile memory which stores information associated with the occupants. In an embodiment, the storage unit 135 may include one or more databases. The apparatus 110 may include a database 195 that stores design specifications associated with the cooling system 102. In an embodiment, the design specifications (also referred to as on-design conditions) include operating ranges corresponding to performance parameters and/or operating variables associated with the cooling system 102. The operating ranges are defined based on minimum values, maximum values or ranges of values for which the cooling system 102 is designed for optimal operation. If the value of performance parameters and/or operating variables fall outside an operating range prescribed in the design specifications, the cooling system 102 is said to be operating in an off-design condition.

The network interface 145 enables the apparatus 110 to communicate with the one or more sources 105 and the one or more target devices 115 via the network 120. The input unit 150 may include input means such as keypad, touch-sensitive display, camera, etc. capable of receiving input signal. The bus acts as interconnect between the processing unit 125, the memory 130, the storage unit 135, and the network interface 145. The output unit 155 may include display devices, audio output devices, sound cards, video cards etc.

The communication unit 140 enables the apparatus 110 to communicate with the one or more sources 105 and the one or more target devices 115. The communication unit 140 may support different standard communication protocols such as Transport Control Protocol/Internet Protocol (TCP/IP), Profinet, Profibus, Internet Protocol Version (IPv), AMQP, Bluetooth and BLE, Cellular, CoAP, DDS, LoRa and LoRaWAN, LWM2M, MQINT, Wi-Fi, XMPP, Zigbee and Z-Wave.

Those of ordinary skilled in the art will appreciate that the hardware depicted in FIGS 1A & 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

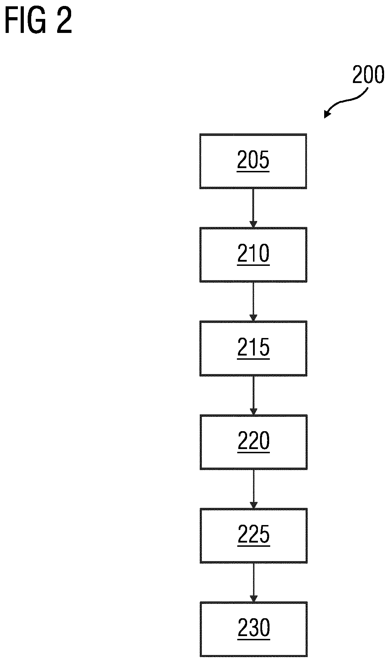

FIG 2 shows a flowchart of an exemplary method 200 for managing cooling load within a building, in accordance with an embodiment of the present invention. The method 200 is implementable on the apparatus 110 described earlier with reference to FIGS 1A and 1B. The method 200 includes steps 205 to 230.

At step 205, cooling load data associated with one or more locations within the building is obtained from one or more sources. In an implementation, the cooling load data is computed or derived from one or more parameters obtained from the one or more sources. Non-limiting examples of such parameters include, but are not limited to, number of occupants within a location in the building, presence of heat-generating equipment, humidity and airflow rate. In another embodiment, the cooling load data may be input by a user via a human-machine interface. Alternatively, the user may input an occupancy data associated with specific locations within the building. The one or more sources may therefore, comprise at least one of temperature sensors, occupancy sensors, airflow sensors, humidity sensors, infrared cameras and human-machine interfaces. In an embodiment, the cooling load data is obtained in real-time or near real-time. If the one or more sources include occupancy sensors, the cooling load may be estimated based on the occupancy within the building. For example, if 20 people are detected within a specific location, based on sensors installed at a door to the location, the cooling load may be computed based on standard cooling load value per person. Similarly, if the presence of humans or heat-generating equipment such as workstations or servers are detected using an infrared camera, the cooling load may be estimated based on heat measurements calibrated based on infrared images captured by the infrared camera.

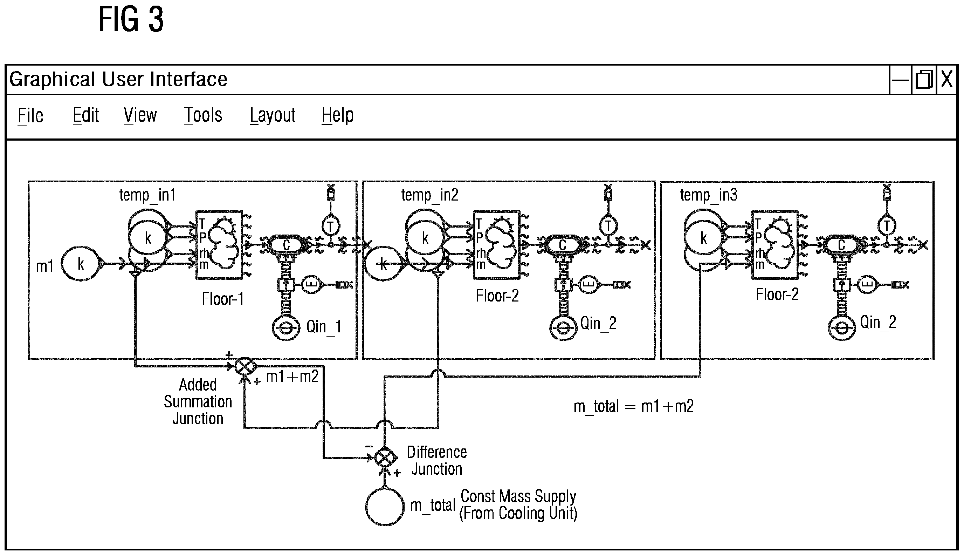

At step 210, values of a plurality of operating variables associated with the cooling system are estimated using the cooling load data. In an embodiment, estimating values of the plurality of operating variables associated with the cooling system using the cooling load data, includes configuring, using the cooling load data, a virtual model based on a combination of at least the building and the cooling system. In an embodiment, virtual model is a physics-based model based on a combination of at least the building and the cooling system. It must be understood that in addition to the building and the cooling system, the virtual model may also include components corresponding to heat-generating equipment such as stoves, datacenter hardwares, etc. FIG 3 shows a Graphical User Interface 300 showing a simulation model (virtual model) of a three-storeyed building developed on Aimesim for a three-storeyed building with three locations `Floor 1', `Floor 2' and `Floor 3, each having a blower installed therein. The input to the virtual model includes local temperature T, pressure P, relative humidity rh, and cooling flowrate m. The total cooling air mass m_total is the sum of cooling air masses supplied in each of `Floor 1', `Floor 2' and `Floor 3' via the respective blowers, as the cooling air supply from the cooling system is constant. That is if the cooling air mass supply for Floor_1 is m1 and for Floor_2 is m2, then the cooling air mass supply to Floor_3 m3 + m_total - (m1+m2).

In the present example, temperature at different locations within the building, as present in the cooling load data, are provided to respective input nodes of the virtual model. Further, a thermal behaviour of the building is simulated based on the configured virtual model. In an embodiment, the thermal behaviour is determined using two or more parallel simulations, each of which correspond to a specific part of the building. In the present example, the thermal behaviour in the three floors of the three-storeyed building are determined by parallel execution of simulations corresponding to each of the three floors. Further, values of the plurality of operating variables associated with the cooling system are estimated based on the simulation of the thermal behaviour of the building. More specifically, the output of the simulation indicates values of the operating variables. In the present example, the plurality of operating variables include nine variables: temp_in1, temp_in2, temp_in3, m1, m2, m3, Qin1, Qin2 and Qin3, wherein temp_in1, temp_in2, temp_in3 represent local temperatures on `Floor 1', `Floor 2' and `Floor 3'; m 1, m2, m3 represent cooling flowrate from blowers located in `Floor 1', `Floor 2' and `Floor 3'; and Qin1, Qin2 and Qin3 represent heat transfer rate in `Floor 1', `Floor 2' and `Floor 3'.

Advantageously, the use of the virtual model for performing the one or more simulations helps us in estimating a plurality of operating variables using the cooling load data without the use of additional hardware components such as sensors.

At step 215, an optimized cooling flowrate is computed for each of the one or more locations using an optimizer, based on the estimated values of the plurality of operating variables. At least one objective associated with the optimizer is to minimize a total energy consumption by the cooling system. In an embodiment, the cooling flowrate associated with each of the locations in the building is optimized, wherein at least one constraint associated with the optimizer being a temperature in each of the locations within a predefined temperature range. In the present example, the temperature in each of the locations is to be within 22 +/- 5°C, upon optimization. In another embodiment, the at least one constraint is that the sum of cooling air mass supplied to each of the locations is a constant value.

In an embodiment, the optimized cooling flowrate is determined if an off-design condition associated with the cooling system (102) is detected based on the cooling load data. In a further embodiment, an off-design condition associated with the cooling system is detected based on the cooling load data. In an embodiment, detecting the off-design condition includes determining at least one performance parameter of the cooling system based on the cooling load data. Further, the determined performance parameter is compared with a designed specification of the cooling system. Based on the comparison, the off-design condition associated with the cooling system is detected. In an example, temperature at one or more locations in the building may be calculated from the cooling load. Further, the determined temperature is compared to a predefined range of temperatures. If the temperature is outside the predefined range, it is determined to be an off-design condition. In another embodiment, the temperature difference between the two locations in the building is used to determine heat transfer effectiveness. Further, the heat transfer effectiveness is compared against a predefined minimum heat transfer effectiveness present in the design specifications. If the calculated heat transfer effectiveness is lower than the predefined minimum heat transfer effectiveness, it is identified as an off-design condition. Similarly, other performance parameters may also compared against corresponding predefined values or ranges in the design specifications, to identify off-design conditions. Non-limiting examples of such other performance parameters include airflow rate, air temperatures, pressure drops across condensor and evaporator coils, and energy consumption of the cooling system. In particular, the cooling flowrates m1, m2, m3 are optimized to bring at least one of the performance parameters in the off-design condition back to an on-design condition.

In an embodiment, the optimizer is an evolutionary algorithm-based optimization algorithm such as genetic algorithm. In another embodiment, the optimizer is a design space exploration tool such as the Simultaneous Hybrid Exploration that is Robust, Progressive, and Adaptive (SHERPA) algorithm used in HEEDS. In yet another embodiment, the optimizer is a Non-Linear Programming by Quadratic Lagranian (NLPQL) algorithm. However, it must be understood by a person skilled in the art that other optimiziers not mentioned explicity herein may also be used adapted to compute the optimized cooling flowrates, based on the estimated values of the plurality of operating variables.

At step 230, instructions for implementing the optimized cooling flowrate for each of the one or more locations are generated and transmitted to one or more target devices operably coupled to the cooling system. For example, the target devices include actuators associated with blowers installed inside the building. In an embodiment, the instructions for implementing the optimized cooling flowrate(s) are packaged into machine-readable instructions, which are then transmitted to the cooling system 102 for implementation. In another embodiment, the optimized cooling flowrates for each of the locations is displayed on a human-machine interface. Further, a user/occupant may choose to confirm whether they would like to implement the optimized cooling flowrates, for example, via a 'Yes/No' tab. In the present example, the cooling flowrates associated with the blowers on each of the floors 1, 2 and 3 are adjusted to the optimized cooling flowrates m1, m2 and m3 respectively, in order to minimize energy consumption of the cooling system, while maintaining the temperature at 22+/-5°C.

Advantageously, the present invention facilitates managing of cooling load conditions for specific loations within a building. Such managing may also include planning in advance for effectively managing cooling load for a given occupancy situation. For example, a user may provide tentative occupancy in specific location(s) within the building to plan how best the cooling flowrates must be adjusted to minimize energy consumption by the cooling system, while maintaining a desired temperature in each of the locations. Furthermore, the invention also faciliates effective management of off-design conditions associated with cooling systems for optimal energy consumption. Further, the present invention enables dynamic control of a cooling system without the need for expert intervention for reprogramming the cooling system whenever an off-design condition is detected. Additionally, the present invention may be easily scaled up by updating the virtual model, in case more locations have to be added, thereby further reducing hardware (sensors) required for measuring operating variables in the added locations.

The present disclosure is not limited to a particular computer system platform, processing unit, operating system, or network. One or more aspects of the present disclosure may be distributed among one or more computer systems, for example, servers configured to provide one or more services to one or more client computers, or to perform a complete task in a distributed system. For example, one or more aspects of the present disclosure may be performed on a client-server system that comprises components distributed among one or more server systems that perform multiple functions according to various embodiments. These components comprise, for example, executable, intermediate, or interpreted code, which communicate over a network using a communication protocol. The present disclosure is not limited to be executable on any particular system or group of system, and is not limited to any particular distributed architecture, network, or communication protocol.Those of ordinary skilled in the art will appreciate that the hardware depicted in FIGS 1A and 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

While the invention has been illustrated and described in de-tail with the help of a preferred embodiment, the invention is not limited to the disclosed examples. Other variations may be deducted by those skilled in the art without leaving the scope of protection of the claimed invention.

### List of References

100 system
102 cooling system
105 one or more sources
110 apparatus
115 one or more target devices
120 network
125 processing unit,
130 memory
135 storage unit
140 communication unit
145 network interface
150 input unit
155 output unit
160 standard interface or bus
165 cooling load management module
170 cooling load detection module
175 off-design detection module
180 variables estimation module
185 optimization module
190 instruction management module
195 database

## Claims

1. A method for managing cooling load within a building wherein a cooling system (102) is installed, the method comprising:
obtaining, by a processing unit (125), cooling load data associated with one or more locations within the building from one or more sources (105);
estimating values of a plurality of operating variables associated with the cooling system (102) using the cooling load data;
computing optimized cooling flowrate for each of the one or more locations using an optimizer, based on the estimated values of the plurality of operating variables, wherein at least one objective associated with the optimizer is to minimize a total energy consumption by the cooling system;
generating and transmitting, to one or more target devices (115) operably coupled to the cooling system (102), instructions for implementing the optimized cooling flowrate for each of the one or more locations.

2. The method according to claim 1, wherein the one or more sources comprise at least one of temperature sensors, occupancy sensors, airflow sensors, humidity sensors and human-machine interfaces.

3. The method according to claim 1 or 2, wherein estimating values of the plurality of operating variables associated with the cooling system (102) using the cooling load data, comprises:
configuring, using the cooling load data, a virtual model based on a combination of at least the building and the cooling system (102);
simulating a thermal behaviour of the building based on the configured virtual model; and
estimating values of the plurality of operating variables based on the simulation of the thermal behaviour of the building.

4. The method according to claims 1 and 3, wherein the virtual model is a physics-based model based on a combination of at least the building and the cooling system (102).

5. The method according to any of the preceding claims, wherein the plurality of operating variables comprise a heat transfer rate, local temperature and cooling flowrate associated with the one or more locations within the building.

6. The method according to any of the preceding claims, wherein at least one constraint associated with the optimizer comprises maintaining a temperature in each of the locations within a predefined temperature range.

7. The method according to any of the preceding claims, wherein the optimized cooling flowrate is computed if an off-design condition associated with the cooling system (102) is detected based on the cooling load data.

8. The method according to claim 1 and 7, wherein detecting the off-design condition associated with the cooling system (102) based on the cooling load data, comprises:
determining at least one performance parameter of the cooling system (102) based on the cooling load data;
comparing the determined at least one performance parameter with a design specification of the cooling system (102); and
detecting the off-design condition associated with the cooling system (102) based on the comparison.

9. The method according to claim 1 and 8, wherein the performance parameter is at least one a heat transfer rate, temperature difference between two locations in the building, heat transfer effectiveness, airflow rate, air temperatures and energy consumption of the cooling system (102).

10. An apparatus for managing cooling load within a building, the apparatus comprising:
one or more processing units (125); and
a memory unit (130) communicatively coupled to the one or more processing units (125), wherein the memory unit (130) comprises a cooling load management module (165) stored in the form of machine-readable instructions executable by the one or more processing units (125), wherein the cooling load management module (165) is configured to perform method steps according to any of the claims 1 to 9.

11. A system (100) for managing cooling load within a building, wherein a cooling system (102) is installed, the system (100) comprising:
one or more sources (105) configured for providing cooling load data associated with the cooling system (102);
an apparatus (110) according to claim 10, communicatively coupled to the one or more sources (105), wherein the apparatus (110) is configured for managing heat load within one or more locations within the building based on the cooling load data, according to any of the method claims 1 to 9.

12. A computer-program product having machine-readable instructions stored therein, which when executed by one or more processing units (125), cause the processing units (125) to perform a method according to any of the claims 1 to 9.
